# EUROPÄISCHE PATENTSCHRIFT

(11) **EP 3 154 112 B1**
(45) Veröffentlichungstag und Bekanntmachung des Hinweises auf die Patenterteilung: **31.07.2019**
(21) Anmeldenummer: 16002311.5
(22) Anmeldetag: 29.06.2009
(51) Int. Cl.: H01M 4/38, C05C 1/00, C25C 1/02, C22B 26/12, C25C 3/02, H01M 6/04, B01J 19/08, C05C 3/00, H01M 14/00, C25C 3/04, C25C 3/06, C25C 3/34, H01M 6/02

(54) **MOBILER ENERGIETRÄGER UND ENERGIESPEICHER**
MOBILE ENERGY CARRIER AND ENERGY STORAGE DEVICE
SOURCE D'ÉNERGIE MOBILE ET RÉSERVOIR

(30) Priorität: 04.07.2008 DE 102008031437
(43) Veröffentlichungstag der Anmeldung: 12.04.2017
(62) Teilanmeldung aus: 09772381.1
(73) Patentinhaber: Siemens Aktiengesellschaft, 80333 München (DE)
(72) Erfinder: Schmid, Günter, 91334 Hemhofen (DE)

(56) Entgegenhaltungen:
- DE-A1- 3 532 956
- US-A- 5 219 550

## Beschreibung

Die Erfindung betrifft einen mobilen Energieträger und Energiespeicher mit dem Energie in Form von Materie von weit in der Welt verteilten Zonen mit beispielsweise viel Solarenergie, Windenergie oder sonstiger CO₂-neutraler Energie, wie z. B. dem Äquator, in Zonen mit viel Energiebedarf, wie z. B. Europa, transportiert werden kann.

Es ist ein allgemeines Problem, dass Energie knapp und teuer ist, die Ölreserven der Welt begrenzt sind und der CO₂-Ausstoß bei der Energienutzung kontrolliert werden muss.

Daher besteht immer der Bedarf, Energieträger zu schaffen, die nutzbare, möglichst CO₂-neutrale Energieträger in den Industriezonen zur Verfügung stellen.

Es gab schon etliche Anstrengungen, die in den natürlich vorkommenden Gesteinen oder Sand gespeicherte Energie grenzüberschreitend nutzbar zu machen. Insbesondere im Zusammenhang mit der Siliziumgewinnung wurden schon Versuche gemacht, aus Quarz oder Sand Energie zu gewinnen. Dies geschieht über kohlenwasserstoffanaloge Verbindungen, die chemisch über einige energieintensive Zwischenschritte erhalten werden müssen.

Es scheiterte aber bislang immer an der negativen Energiebilanz, die bei Berücksichtigung aller Faktoren wie Freisetzung der enthaltenen Energie, Transport, etc., entsteht.

Aufgabe der vorliegenden Erfindung ist es deshalb, einen mobilen Energieträger zu schaffen, durch den, bei positiver Energiebilanz, Energie beispielsweise als Sonnenenergie am Äquator aufgenommen und in Mitteleuropa wieder freigesetzt werden kann. Der Energieträger kann aber auch dazu eingesetzt werden, um Überschussenergie in Industrieländern zu speichern.

Die Erfindung ist ein Verfahren zum Energietransport und zur Energiespeicherung gemäß Anspruch 1. Die bevorzugten Ausführungen sind in den abhängigen Ansprüchen definiert. Gegenstand der Offenbarung ist ein Energieträger in Form von elementarem Metall, wobei das Metall ein elektropositives Metall ist. Weiterhin ist die Verwendung eines elektropositiven Metalls als Energieträger und speicher Gegenstand der Offenbarung. Als Energieträger wird vorliegend ein Material bezeichnet, das CO₂-neutrale und erneuerbare Energie rund um den Globus aufnimmt, dann möglichst kosteneffektiv transportiert werden kann und jederzeit die gespeicherte Energie wieder freisetzt. Der Energieträger ist geeignet, direkt in Form von primären elektrochemischen Zellen zur Stromerzeugung, durch Reaktion mit Luftstickstoff zur Herstellung von Düngemitteln und gleichzeitig zur Erzeugung thermischer Energie, sowie allein durch Verbrennung zur Energiegewinnung genutzt zu werden. Der Energieträger ist weit am Anfang einer möglichen Energiekette angesiedelt.

Die Herstellung von Solarzellen ermöglicht die direkte Umwandlung von Sonnenlicht in elektrische Energie. Der hier erstmals vorgestellte Energieträger und -speicher kann für die Speicherung von photovoltaisch erzeugter Energie eingesetzt werden.

Bevorzugt wird ein Metall genommen, das in ausreichender Menge verfügbar ist. Lithium ist mit einem Vorkommen von 0,006 % der Erdoberfläche vergleichbar mit Kupfer und Wolfram an natürlichem Vorkommen. Lithium besitzt gegenüber den anderen Alkali- und Erdalkalimetalle Vorteile in Hinblick auf Transporteigenschaften und Freisetzung der Energie. Hervorzuheben sind auch weitere elektropositive Elemente, die als Energiespeicher und -träger im Sinne der Erfindung gewertet werden können wie Zink, Magnesium Aluminium und/oder die Lanthanoiden, die ebenfalls in einer ausreichenden Menge vorkommen und hier als Energieträger eingesetzt werden können. Bevorzugt ist das Metall ein stark elektropositives Metall, das zudem leicht ist. Insbesondere geeignet sind Metalle wie Lithium. Lithium mit einer Dichte von 0,534 g/cm³ nach dem festen Wasserstoff das leichteste aller festen Elemente.

Durch die besondere Elektronenkonfiguration am Lithium in elementarer Form hat dieses Metall die höchste Elektropositivität überhaupt, da die Bereitschaft, das einzige Elektron auf der 2 s Schale abzugeben, sehr hoch ist. So hat Lithium das negativste Potential überhaupt von -3,045 Volt.

Der Energiespeicherzyklus läuft damit wie folgt ab: Zunächst wird der Energieträger Lithium aus dem natürlich vorkommenden Lithiumcarbonat oder daraus abgeleiteter Salze durch Schmelzflusselektrolyse hergestellt.

Wie die weiteren Alkalimetalle wie Natrium und Kalium reagiert es heftig mit Wasser und Luft, allerdings weniger stark.

Lithium kann erfindungsgemäß in Form von massiven Gebinden transportiert werden, damit möglichst wenig Angriffsfläche für Luft- und Wasser vorhanden ist. So kann Lithium solarthermisch aufgeschmolzen werden und in flüssiger Form gepumpt werden. Zur Lagerung lässt man den Energieträger erstarren.

Dies gilt ebenso für die anderen Alkalimetalle und in eingeschränktem Maße auch für Zink (nicht Teil der vorliegenden Erfindung).

Eine alternative erfindungsgemäße Transportform ist auch Lithiumhydrid, das in fester Form transportiert wird. Denkbar ist auch der Einsatz anderer Lithiumderivate, wie beispielsweise von Lithium-Komplexverbindungen (nicht Teil der beanspruchten Erfindung).

Zur Freisetzung der Energie wird erfindungsgemäß die Reaktion mit Wasser oder Luftsauerstoff verwendet. Die entstehenden Hydroxide bzw. Oxide werden wieder im den Kreislauf zurück geführt.

Die im Falle einer Havarie bei der Reaktion mit Sauerstoff oder Wasser entstehenden Produkte sind alle wasserlöslich und werden durch CO₂ neutralisiert. Daher ist im Gegensatz zur Nuklearenergie keine langfristige Schädigung der Umwelt zu erwarten.

Lithium wird bereits als aktives Material in negativen Elektroden verwendet. Aufgrund des Standardpotentials von etwa -3,5 Volt (dem negativsten aller chemischen Elemente und der daraus realisierbaren hohen Zellspannung sowie der hohen theoretischen Kapazität von 3,86 Ah/g ist Lithium ein "ideales" negatives Elektrodenmaterial (Kathodenmaterial) für elektrochemische Zellen. Daher kann in primären elektrochemischen Zellen beispielsweise in Kombination mit einer Luftanode elektrische Energie gewonnen werden.

Die erfindungsgemäße Verwendung von Lithium zeigt, welche Vorteile der Einsatz der erfindungsgemäß vorgeschlagenen mobilen Energieträger gegenüber dem Stand der Technik, wie beispielsweise die Energiegewinnung aus Öl, bringt. Lithium kann elektrochemisch aus natürlich vorkommenden Gesteinen oder Abfallprodukten aus der Natrium-Kaliumsalzverarbeitung (in Form des Carbonats) durch Elektrolyse, insbesondere durch Schmelzelektrolyse hergestellt werden. Lithiumhydrid kann durch eine solarthermische Reaktion bei erhöhter Temperatur direkt aus den Elementen hergestellt werden.

Zur Elektrolyse können alle Arten von erneuerbaren Energien eingesetzt werden. Erfindungsgemäß wird Windenergie, Sonnenenergie, Biogasenergie oder Überproduktion aus Atomkraftwerken zur Gewinnung des reinen Lithiums in elementarer Form eingeset zt. Das Lithium wird in Form des reinen Metalls oder in Form des Hydrids transportiert. Dabei sind Vorsichtsmaßnahmen erforderlich, allerdings beispielsweise beim Transport über See kann das Metall in doppelwandigen Schiffen geführt werden, wobei die Umweltrisiken des Transports geringer als die beim Öltransport sind, weil alle Reaktionsprodukte mit Wasser oder Luftsauerstoff des Lithiums wasserlöslich sind.

Lithium (0,54 g/cm³) oder Lithiumhydrid (0,76 g/cm³) haben eine deutlich geringere Dichte als Wasser. Schiffe oder Container, die mit dem Energiespeicher beladen sind, sind daher unsinkbar. Dies gilt in eingeschränktem Maße auch für die anderen Alkalimetalle.

Zum Beladen oder Entladen kann das Lithiummetall, das einen vergleichsweise niedrigen Schmelzpunkt von ca. 180°C hat, beispielsweise gepumpt werden. Lithium verfügt über den größten Flüssigkeitsbereich unter allen Alkalimetallen.

In Form des reinen Metalls oder des Metallhydrids wird erfindungsgemäß Lithium eingesetzt. Auch können deren Homologen Natrium, Kalium und auch Zink, Aluminium, Magnesium und die Lanthanoide demnach als Energieträger eingesetzt werden (nicht erfindungsgemäß).

Es wird deshalb erfindungsgemäß vorgeschlagen, elementares Lithium oder Lithiumhydrid weltweit an geeigneten Stellen mit erneuerbarer Energie herzustellen und das Metall dann in geeigneten, beispielsweise hermetisch gegen Luft und Sauerstoff versiegelten Containern nach Europa oder in sonstige Energie verbrauchende Zonen zu transportieren, wo die in dem Metall oder Metallhydrid gespeicherte potentielle Energie durch Umsetzung mit Sauerstoff ("Verbrennung") oder mit Wasser umweltneutral freigesetzt werden kann.

Die thermische Energie, die bei der Verbrennung von Lithium freigesetzt wird, ist mit -599,1 kJ/mol oder -143,1 kcal/mol oder -20,4 kcal/g ungefähr dreimal so hoch wie die der Kohle.

Im Gegensatz zur Kohle wird aber bei der Lithium-Verbrennung kein Abgasproblem auftreten, da Lithium quantitativ zum Oxid verbrennt, das nicht gelagert werden muss, sondern aus dem, nach geeignetem, Transport wieder an geeigneter Stelle in der Welt das Metall in reiner Form gewonnen wird.

Mehr Energie wird sogar noch bei der Reaktion des Metalls mit Wasser frei. Das entstehende Abfallprodukt ist Lithiumhydroxid, das ebenfalls wie das bei der Verbrennung entstandene Oxid als Rohstoff für die Lithiumgewinnung einsetzbar ist.

Ein weiterer wichtiger Vorteil des Lithiums als Energiespeicher ist ein direkter Zugang zur Herstellung von Düngemitteln, die für die Versorgung der Weltbevölkerung mit Nahrungsmitteln unabdingbar sind. In der Biogasgewinnung könnten sie, wenn auch mit geringer Effizienz ebenfalls eingesetzt werden.

Dabei wird Lithium direkt mit Luftsauerstoff zu Lithiumnitrid umgesetzt. Die Reaktion läuft bereits bei Raumtemperatur langsam ab, kann aber durch Temperaturerhöhung gesteuert werden. Im Anschluss daran reagiert Lithiumnitrid mit Wasser zu Ammoniak und Lithiumhydroxid. Ammoniak stellt eine der wichtigsten Stickstoffquellen der chemischen Industrie dar. Große Mengen Ammoniak werden für die Herstellung von Düngemitteln verwendet. Dabei werden große Mengen thermischer Energie frei. Ammoniak kann nach dem Ostwaldverfahren verbrannt werden. Die dabei entstehende Salpetersäure wird durch Ammoniak neutralisiert. Das entstandene Ammoniumnitrat kann direkt in der Landwirtschaft verwendet werden.

Damit wird durch die Verwendung von Lithium als Energieträger und -speicher die Herstellung von Düngemitteln ohne Verwendung fossiler Brennstoffe ermöglicht. Solarenergie wird dabei in einem hochwertigen Düngemittel gespeichert. Lithium dient das Mediator.

Eine primäre elektrochemische Zelle ist ein Energiespeicher, beispielsweise ein galvanisches Element, bei dem die gespeicherte Energie sofort zur Verfügung steht und das - im Gegensatz zu den sekundären elektrochemischen Zellen, den so genannten Akkus, prinzipiell nicht wieder aufladbar ist. Erfindungsgemäß wird erstmals vorgeschlagen, ein elektropositives Metall, Lithium, zur Lösung des allgemeinen Energieproblems einzusetzen. Dazu wurde überraschend gefunden, dass Lithium durch seine Leichtigkeit, sein extremes Normalpotential und seinen großen Flüssigkeitsbereich sich tatsächlich für den Transport von Energie, besser und mit weniger Risiken für die Umwelt als Erdöl, eignet. Dies insbesondere auch deshalb, weil Lithium bei der Umsetzung mit Wasser oder Sauerstoff wasserlösliche Produkte bildet, die, wenn sie einmal abreagiert haben, mit CO₂ neutralisierbar sind (1 g LiOH bindet 450 ml CO₂). Zusätzlich dient Lithium zur Fixierung von Luftstickstoff, um ihn für biologische Kreisläufe, wie beispielsweise in der Düngemittelbranche, nutzbar zu machen.

## Patentansprüche

1. Verfahren zum Energietransport und zur Energiespeicherung, folgende Verfahrensschritte umfassend:
- Wandlung von Sonnen- Wind- und/oder Biogasenergie in elektrische Energie oder Überproduktion elektrischer Energie aus Atomkraftwerken,
- Nutzung der elektrischen Energie zur Herstellung eines Energieträgers in Form von reinem Lithium in elementarer Form,
- Überführen des Energieträgers in eine transportable oder lagerfähige Form, wobei die transportable Form massive Gebinde mit einer möglichst geringen Angriffsfläche für Luft- und Wasser darstellt,
- Transport des Energieträgers Lithium in Form massiver Gebinde oder Transport in Form von Lithiumhydrid, das in fester Form transportiert wird oder in Form von in flüssiger Form gepumptem solarthermisch aufgeschmolzenem Lithium, Lagerung des Energieträgers in erstarrter Form und schließlich
- Freisetzung der gespeicherten Energie durch Reaktion mit Wasser oder Sauerstoff.

2. Verfahren nach einem der vorhergehenden Ansprüche, wobei eine Sauerstoffverbindung des Lithiums als Rohstoff zur Herstellung des Energieträgers verwendet wird.

3. Verfahren nach einem der vorhergehenden Ansprüche, wobei das Lithium in primären elektrochemischen Zellen verwendet wird.

## Claims

1. Method for transporting energy and for storing energy, comprising the following method steps:
- converting solar, wind and/or biogas energy into electrical energy or using overproduction of electrical energy from nuclear power stations,
- using the electrical energy for producing an energy carrier in the form of pure lithium in elementary form,
- transforming the energy carrier into a transportable or storable form, the transportable form taking the form of solid bulk units such that there is as little surface area as possible for air and water to act on,
- transporting the energy carrier as lithium in the form of solid bulk units or transporting it in the form of a lithium hydride that is transported in a solid form or in the form of solar-thermally melted lithium pumped in liquid form, storage of the energy carrier in the solidified form and finally
- releasing the stored energy by reaction with water or oxygen.

2. Method according to the preceding claim, an oxygen compound of the lithium being used as the raw material for producing the energy carrier.

3. Method according to one of the preceding claims, the lithium being used in primary electrochemical cells.

## Revendications

1. Procédé de transport d'énergie et d'accumulation d'énergie comprenant les stades de procédé suivants :
- transformation d'énergie solaire, éolienne et/ou de biogaz en énergie électrique ou production excédentaire d'énergie électrique à partir de centrales atomiques,
- utilisation de l'énergie électrique pour fabriquer une source d'énergie sous la forme de lithium pur sous forme élémentaire,
- transformation de la source d'énergie en une forme transportable ou susceptible d'être emmagasinée, la forme transportable représentant des emballages compacts ayant des surfaces d'attaque de l'air et de l'eau aussi petites que possible,
- transport de la source d'énergie lithium en emballages compacts ou transport sous la forme d'hydrure de lithium, qui est transporté sous forme solide ou sous la forme de lithium fondu par la chaleur solaire et pompé sous forme liquide, emmagasinage de la source d'énergie sous forme solidifiée et finalement
- libération de l'énergie emmagasinée par réaction sur l'eau ou l'oxygène.

2. Procédé suivant l'une des revendications précédentes, dans lequel on utilise un composé oxygéné du lithium, comme matière première pour la production de la source d'énergie.

3. Procédé suivant l'une des revendications précédentes, dans lequel on utilise le lithium dans des piles électrochimiques primaires.
